# EUROPEAN PATENT SPECIFICATION

(11) **EP 2 211 822 B1**
(45) Date of publication and mention of the grant of the patent: **15.05.2024**
(21) Application number: 08840868.7
(22) Date of filing: 23.10.2008
(51) Int. Cl.: A61J 17/00

(54) **SOOTHER**
SCHNULLER
SUCETTE POUR BÉBÉ

(30) Priority: 23.10.2007 GB 0720730
(43) Date of publication of application: 04.08.2010
(73) Proprietor: Mayborn (UK) Limited, Newcastle upon Tyne, NE12 8EW (GB)
(72) Inventor: SCHOFIELD, Paul, Middlesborough TS9 5HF (GB); REES, Arnold, Tyne and Wear NE3 5JA (GB)
(74) Representative: Bloor, Sam
(86) International application number: PCT/GB2008/003593
(87) International publication number: WO 2009/053699

(56) References cited:
- EP-A- 1 344 621
- WO-A-02/064079
- WO-A-2007/028971
- DE-A1- 3 316 824
- US-A- 4 297 313
- US-A1- 2003 100 922

## Description

The invention relates to a soother and a method of making a soother.

Conventional soothers, sometimes referred to as dummies, are basically formed of a teat/nipple/baglet which is sucked by a child and a shield or ring on which the teat is mounted to prevent the child from choking on the teat. A common form of soother comprises a multi component assembly wherein the teat, formed of latex or silicone, is formed with an assembly of parts.

Prior patent document WO 02/064079 A describes a pacifier, or dummy. Prior patent document US 2003/100922 A1 describes a one-piece pacifier. Prior art document EP 1 344 621 A describes a process for coalescing elastomeric article with a substantially square-shaped elastomeric bead. Prior art document US 4 297 313 A describes a pacifier. Prior art document DE 33 16 824 A1 describes a method for the production of a dummy teat.

As soothers are small devices that go into the mouths of babies and infants, the national/international standards for factors such as strength, material choice and non deformability of soothers are very strict. Only items which have absolute minimum risk are acceptable and this provides many design challenges. They also need to be able to withstand frequent steam-sterilisation without loss of performance.

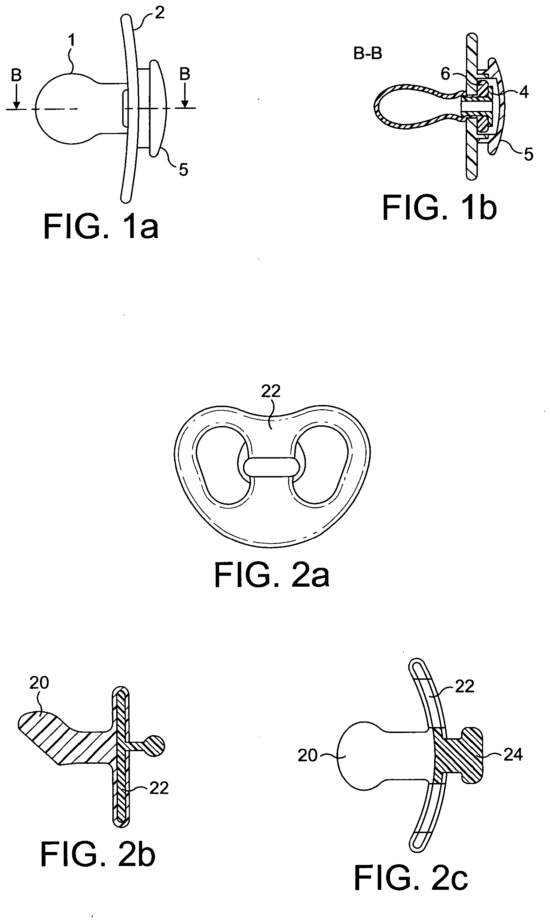

One known soother arrangement is shown in Figs.1a and 1b. A soother includes a teat 1, a hard shield 2 of sufficient diameter that the child cannot insert the soother fully into its mouth, a plug 4 and a cover 5. The teat 1 is generally hollow and includes a flange 6 at its open end which is pushed through an aperture in the centre of the shield to hold the teat in place on the shield.

To prevent removal of the teat from the shield by pulling, the plug 4, which includes a central shaft and a head portion, is inserted into the open end of the teat 1 to press the sides of the teat against the aperture in the shield 2. The head of the plug 4 is of greater diameter than the aperture in the shield 2 such that the teat 1 cannot be pulled through. The cover 5 is then fitted to the rear of the shield 2 to mask the teat flange and plug 4.

As a result the teat 1 is prevented from becoming detached which is significant as it will be seen that, with the exception of the shield component, all of the parts constitute small parts that would pose a choking hazard to infants if detachment occurred. However the resulting assembly is invariably under shear and compressive stresses required to hold the complete assembly together and these inherent assembly stresses can cause premature failure of a soother. Furthermore cleaning of the soother can be difficult in view of the enclosed spaces and assembly can be complex. In addition, while the hard shield 2 is an ideal structural basis on which to secure a soft, flexible baglet/teat, it has the disadvantage of being uncomfortable for the infant - with the hard, inflexible surface pressed against the face.

To aid comfort for infants, it is desirable to have as large an area of soft material as possible adjacent to the infant's face. Therefore an alternative construction comprises soothers manufactured from one single material and in one-piece construction. The hardness of such one-piece soothers is governed by the materials required for the teat and so the soothers are made of soft flexible materials, wherein known one-piece soothers have a usual hardness in the region of 50 Shore A or equivalent. However such known soothers present a potential safety risk to the infant in that the whole product can relatively easily become compressed into a small size which can form a potential choking hazard to the infant. Therefore regulatory requirements are now in place both nationally and internationally to prevent this.

To construct a soother completely from a single soft material such that it would meet regulatory requirements means that a compromise needs to be taken.

Either the material must be relatively hard, thereby ensuring the soother cannot collapse to a size that allows it to become trapped in an infant's mouth or throat, or the material is soft and the thickness of the shield and baglet is exaggerated in order to provide enough mechanical strength to prevent easy deformation. The harder materials suffer from the fundamental comfort problem for the infant, whilst the larger, softer soothers are unattractive and unwieldy, making them less pliable (and hence undesirable with infants). Additionally, they use significantly more material, thereby adding cost.

A known approach to solving the above-mentioned problem is to modify or develop the traditional soother construction, comprising a rigid polycarbonate frame and soft latex or silicone baglets, so as to maximise the area of soft material while retaining a sufficient rigid support. WO2007/028971 (Iackel International Limited) describes soothers where the rigid skeleton has been minimised to a slim retaining ring at the outer edge of the flat 'shield' area. The retaining ring is fixed to the edge of an extended flange area of the baglet ensuring that an infant's face only comes into contact with the soft baglet material. However, the multiple components and the necessary welding between the two halves of the rigid skeleton do not make for easy manufacture.

No known soother provides the advantage of comfort for the infant whilst meeting regulatory requirements with respect to factors such as strength, material, bite resistance and non deformability to prevent choking, without also requiring complex and therefore expensive manufacturing techniques and/or creating increased waste from excess material used during construction.

The invention is set out in the claims. Because the parts are co-moulded, the respective teat and mount portions can be formed of materials having the required relative flexibilities whilst avoiding the risk of a choke hazard by omitting small parts such as plugs, whilst still ensuring a strong bond between the remaining components. Furthermore because of the nature of the co-moulding bond, the stresses inherent in pre-assembled soothers are avoided, lengthening the lifetime of the product.

Embodiments of the invention will now be described, by way of example, with reference to the drawings of which:
Fig. 1a shows a plan view of a known form of soother;
Fig. 1b shows a cross-sectional side view of the soother of Fig. 1a;
Fig. 2a shows a rear view of a soother according to an example not within the scope of the invention;
Fig. 2b shows a sectional side view of a soother according to the example of Fig. 2a;
Fig. 2c shows a partial sectional plan view of the soother of Fig. 2a;
Fig. 3a shows a rear view of a soother according to a further example not within the scope of the invention;
Fig. 3b shows a sectional side view of a soother according to the example of Fig. 3a;
Fig. 3c shows a plan view of the soother of Fig. 3a;
Fig. 4a shows a rear view of a soother according to a further example not within the scope of the invention;
Fig. 4b shows a sectional side view of a soother according to the example of Fig. 4a;
Fig 4c shows a plan view of the soother of Fig. 4a;
Fig. 5a shows a rear view of a soother according to a further example not within the scope of the invention;
Fig. 5b shows a sectional side view of a soother according to the example of Fig. 5a;
Fig. 5c shows a plan view of the soother of Fig. 5a;
Fig. 6a shows a rear view of a soother according to a further example not within the scope of the invention;
Fig. 6b shows a sectional side view of a soother according to the example of Fig. 6a;
Fig. 6c shows a plan view of the soother of Fig. 6a;
Fig. 7a shows a rear view of a soother according to a further example not within the scope of the invention;
Fig. 7b shows a sectional side view of a soother according to the example of Fig. 7a;
Fig. 7c shows a plan view of the soother of Fig. 7a;
Fig. 8a shows a rear view of a soother according to a further example not within the scope of the invention;
Fig. 8b shows a sectional side view of a soother according to the example of Fig. 8a;
Fig. 8c shows a plan view of the soother of Fig. 8a;
Fig. 9a shows a rear view of a soother according to a further example not within the scope of the invention;
Fig. 9b shows a sectional side view of a soother according to the example of Fig. 9a;
Fig. 9c shows a plan view of the soother of Fig. 9a;
Fig. 10a shows a rear view of the soother of Figs. 9a to 9c showing a bond plane;
Fig. 10b shows a sectional side view of a soother according to the example of Fig. 10a;
Fig. 10c shows a plan view of the soother of Fig. 10a;
Fig. 11a shows a rear view of a soother according to a further example not within the scope of the invention;
Fig. 11b shows a sectional side view of a soother according to the example of Fig. 11a;
Fig. 11c shows a plan view of the soother of Fig. 11a;
Fig. 12a shows a rear view of a soother according to a further example not within the scope of the invention;
Fig. 12b shows a sectional side view of a soother according to the example of Fig. 12a;
Fig. 12c shows a plan view of the soother of Fig. 12a;
Fig. 13a shows a perspective view of a soother according to an embodiment of the invention;
Fig. 13b shows a perspective view of the shield that combines with a baglet to form the soother of Fig. 13a;
Fig. 13c shows a plan view of the outer face of the shield of Fig. 13b;
Fig. 13d shows a plan view of the lower surface of the soother of Fig. 13a;
Fig. 13e shows a side view of the soother of Figs. 13a and 13d; Fig. 13f shows a side view of the shield of Figs. 13b and 13c;
Fig. 14a is a rear plan view of a soother according to yet another embodiment of the invention;
Fig. 14b is a lower perspective view of the soother of Fig. 14a;
Fig. 14c is an upper plan view of the soother of Figs. 14a and 14b; and
Fig. 15 is a plan view of a shield of a soother according to a yet further embodiment of the invention.

In overview a method of making a soother uses a co-moulding, also known as two-shot moulding, process to mould together the relatively flexible material of the teat with the relatively rigid material of the mount or shield. This provides a strong bond allowing the teat to be secured to the mount solely by the interconnection between the components, and thereby removing the need to include a plug or any other additional components in the soother.

Dependent on the nature of the materials, the two parts can rely on the inherent bond formed during the co-moulding process. In addition or alternatively, the surface area of the shield and teat can be maximised such that even two materials that have a relatively weak natural surface bond therebetween can form a secure attachment. This increased surface area can, for example, be achieved by providing a sloping wall or ridge extending between the inner and outer faces of the mount or shield. Because the ridge slopes, it provides a larger surface area than it would if it extended substantially perpendicularly between the two faces, but yet it does not require the overall thickness between the two faces to be increased. Hence a relatively thin soother, which is comfortable for an infant to use, can be achieved.

Optionally the mount may be formed in full or in part by a mesh material. Hence a plurality of apertures can be provided through which the soft teat material can extend in order to overmould and encapsulate at least part of the mount. Alternatively, the mesh itself may be encapsulated by a mount material that is less rigid than the mesh but is more rigid than the flexible material used for the teat portion. Hence a soother is provided that optimises rigidity in order to meet safety standards, comfort when the soother presses against an infant's face, and flexibility of the teat portion when subjected to suction during use. The below-described embodiments ensure that safety is fully attained - which is of paramount importance as soothers are subject to rigorous restrictions, so that they may be left with an infant, without close parental supervision. The soother embodiments additionally provide enhanced simplicity of construction and both immediate and long term performance at a low production cost.

The flexible and semi-rigid parts of a soother can bond together according to the embodiments described below by co-moulding or two-shot moulding.

Where compatible materials are used for the two parts then a bond can be formed between their respective surfaces during the co-moulding process. In the event that the materials selected are incompatible, little or no bond between the surfaces of the materials may take place. Although any appropriate co-moulding process can be used, two particular approaches are described below, namely co-moulding using injection moulding and co-moulding using compression moulding.

The injection moulding process is a well known one in which material to be moulded is injected into an appropriate cavity. The process is particularly appropriate for co-moulding thermo plastic materials. Accordingly the shield portion, which must be a semi-rigid member so as not to pose a choke hazard, can be formed of any suitable material such as PP/PC/PBT This is co-moulded with a suitable grade of flexible thermo-plastic elastomer (TPE), TPU or liquid silicone rubber (LSR) to form the teat or baglet.

The compression moulding process is appropriate for moulding together, for example, two synthetic rubbers such as silicone which is commonly used for infant feeding bottle teats and for soothers. Indeed, in order to meet modem regulatory requirements, silicone rubber is widely the material of choice for the baglet of a soother. It provides the necessary material strength for tensile test demands, toughness to meet bite test criteria and heat stability to withstand sterilisation. Other soft polymers e.g. some grades of thermoplastic elastomers (TPEs), cannot match the performance of silicone and need to have substantially greater thickness to meet the silicone benchmark. However this increased thickness is undesirable since it reduces baglet flexibility and feels alien to the infant, as discussed as above.

The above notwithstanding, account must be taken when using silicone to manufacture baglets or soothers of the fact that it requires high temperature treatment to ensure all volatile components in the silicone are removed. Without this "post-cure" treatment, currently-available silicone materials would not meet International Standards for contaminants and would not be allowed to be used in a product for a child's mouth.

When a silicone baglet is manufactured as a separate part to the shield of a soother, it can be post-cured before assembly and therefore heat-treated in isolation. However, when the silicone material is co-moulded to another, rigid material, the whole soother must be post-cured and therefore the rigid material is subjected to heat-treatment along with the silicone. For rigid materials typical of soothers, e.g. polycarbonate (PC), polypropylene (PP) or harder grades of TPE, the rigid shield will be damaged by the silicone post-curing process and therefore would be discoloured or misshapen, causing the soother to be rejected. The embodiments according to the present application address this potential technical drawback of silicone using a number of approaches, as discussed further below.

It will be recognised that many different types of soother construction can be made using the co-moulding processes described above and various possibilities are discussed below with reference to Figs. 2 to 15. It will be recognised that the embodiments shown are not limiting but indicative of possible constructions.

Figs. 2 to 8 show various example soothers not within the scope of the invention, in which the teat and shield are co-moulded and secured together by over-moulding.

Referring for example to Figs. 2a, 2b and 2c it will be seen that a teat 20 which is generally solid is secured to a shield 22 having a handle 24. In particular the material of the teat encapsulates the front and rear faces of the shield and the periphery of the shield, terminating at the handle 24.

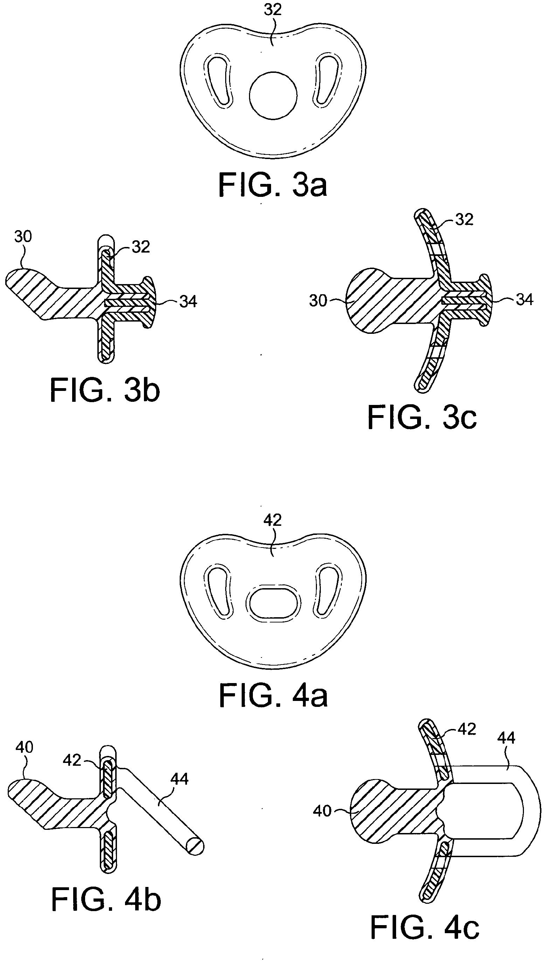

Figs. 3a, 3b and 3c show a variant of the arrangement shown in Figs. 2a, 2b and 2c. The teat 30 is once again solid and over-moulded onto the shield 32. The shield 32 once again includes a handle or grip portion 34 which is also hollow with a central projection forming a generally annular chamber projecting rearwardly from the shield 32. It will be seen that the teat material also fills the annular chamber to improve the bond yet further.

A further variant of the arrangement shown in Figs. 2a, 2b and 2c can be seen in the embodiments shown in Figs. 4a, 4b and 4c. The teat 40 is once again solid and is mounted on a shield 42 having a ring 44 projecting rearwardly from it to allow an infant or adult to hold the soother. The shield 42 includes a central aperture such that it is generally in the shape of a ring and the teat is over-moulded covering the rear and front surfaces of the shield as well as the inner and outer circumference of the ring. As a result a reduced amount of semi-rigid material is required for the shield 42

A further variant of the arrangement shown in Figs.. 2a, 2b and 2c can be seen Figs.. 5a, 5b and 5c. In this case the shield 52 includes a generally rearwardly projecting cylindrical portion 54 open at both ends to provide a through passage in the shield. The teat 50 which is once again a solid teat is over-moulded on a part of the front face of the shield 52 as well as the inner and outer walls of the cylindrical formation through additional apertures 56 in the shield, and over the rear lip of the cylindrical formation. Once again a secure bond is provided and the cylindrical formation provides a convenient grip.

An alternative embodiment is shown in Figs.. 6a, 6b and 6c in which a generally hollow teat 60 is provided over-moulded on a shield 62 having a ring 64 projecting rearwardly from it. The shield 62 has a central aperture 66 such that the shield 62 is generally ring-shaped and the teat material is over-moulded on the front and rear surfaces of the shield and the inner and outer circumferences of the ring. Because the teat is hollow this means that the inside of the teat is accessible via the aperture 66.

Figs.. 7a to 7c show a variant of the arrangement shown in Figs.. 6a to 6c. It will be seen that, in a similar manner to Figs.. 5a to 5c a shield 72 includes an open ended rearwardly projecting cylindrical portion 74 and the teat 70 is moulded over the shield including the cylindrical formation 74. Once again the teat 70 is hollow such that the inside of the teat 70 is accessible via the cylindrical formation 74.

Figs.. 8a to 8c show a further variant of the arrangement shown in Figs.. 6a to 6c. Here once again the teat 80 is hollow and co-moulded with a shield 82 which in this embodiment has a ring 84 projecting rearwardly from it. As can be seen the teat 80 is hollow and partially over-moulded on the shield 82. The shield 82 has a central aperture with a rearwardly projecting cylindrical flange and the teat material is over-moulded on the flange as well. The interior of the teat 80 is again accessible through the central aperture 86 in the shield 82.

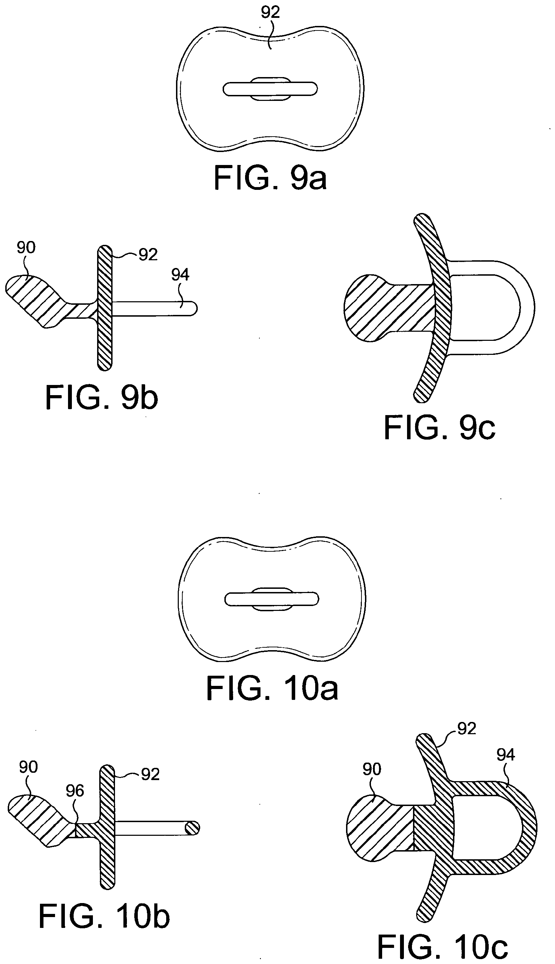

A further alternative set of examples not within the scope of the invention, where the co-moulded materials bond together without the need for over-moulding are shown in Figs. 9 to 11.

Referring firstly to Figs. 9a to 9c a solid teat is shown co-moulded with a shield 92 and a ring or grip 94 projecting rearwardly from the shield. In this case the relatively flexible material of the teat 90 and the relatively rigid material of the shield 92 and the ring 94 are selected such that a bond is formed during the co-moulding process as a result of which additional over-moulding to provide secure attachment is not required. Referring to Figs. 10a to 10c, where like reference numerals relate to like parts the interface between the flexible material of the teat 90 and the rigid material of the shield 92 can be seen at 96.

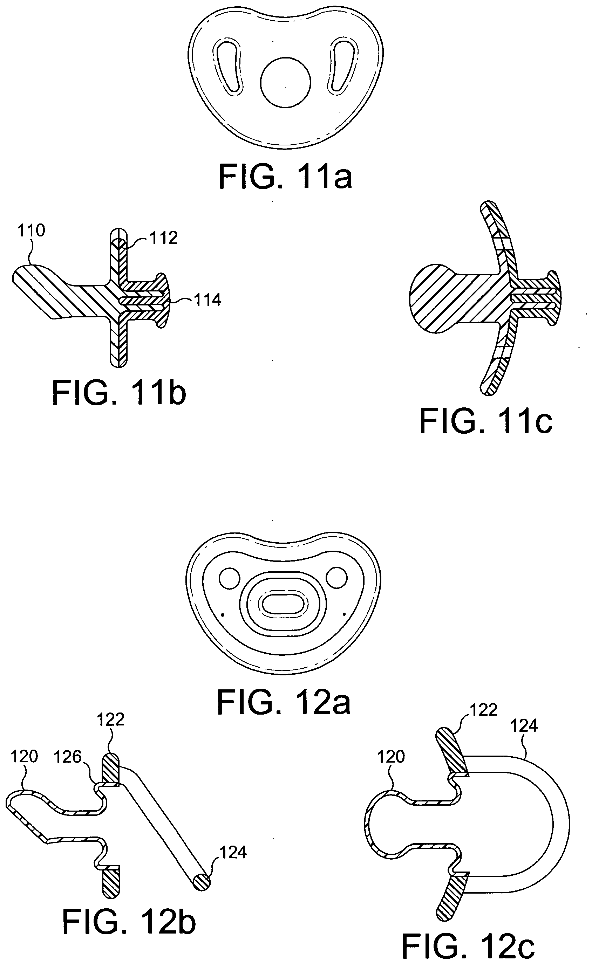

Referring to Figs. 11a to 11c, a solid teat 110 is co-moulded with a shield 112 having a rearwardly projecting grip 114 of the type described above with reference to Figs. 3a to 3c. In the embodiment of Fig. 11, however, the parts are effectively laminated as there is no over-moulding. Once again the materials are bonded together because of their compatibility during the co-moulding process.

More complex teat configurations than those shown in the above-described figures can be adopted of the type, for example, shown in Figs. 12a to 12c. Here a teat 120 is co-moulded with a shield 122 and ring 124 and held in place by bonding of the material. It will be seen that the teat 120 includes a bellows portion 126 concentric with the teat and provided in the vicinity of the bond with the shield 122. As a result the teat can more easily move in and out with suction pressure during use.

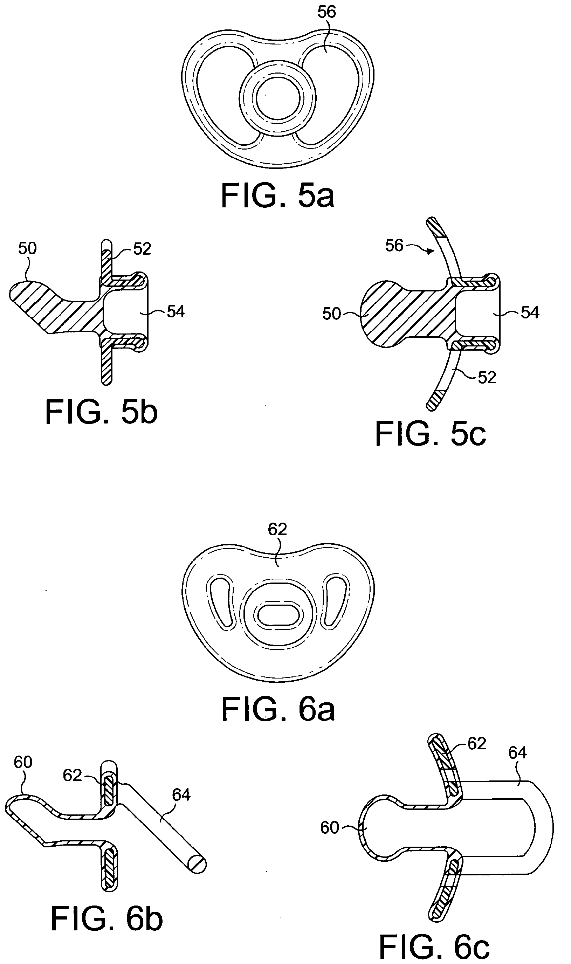

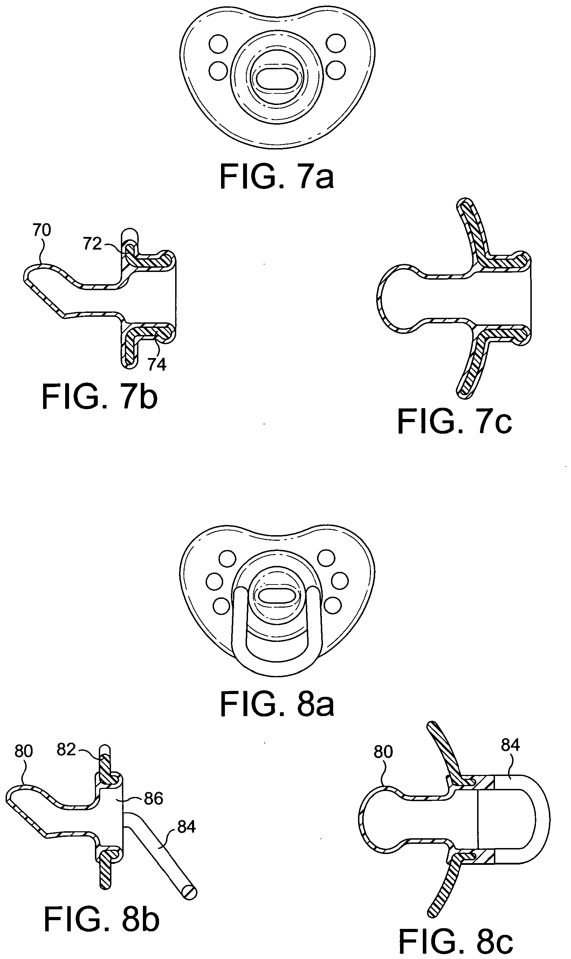

It will be appreciated that any appropriate material can be used for the relevant soother parts as long as the requirements for the form of bonding or securing the parts together are met. However, as discussed above, silicone is usually the preferred teat material, to meet current standards regarding factors such as bite-resistance and resilience against degradation caused by frequent steam sterilisation. For example the teat can be silicone and the shield formed of PBT. This is a possible configuration for the embodiments of Figs.. 2, 3, 4, 6 and 7. Alternatively the teat can be formed of TPE and the shield of polypropylene (PP). This is a possible approach for the embodiments of Fig. 5 and Fig. 8. However, TPE is mechanically inferior to silicone, forcing TPE teats to be thicker than equivalent silicone teats.

In order to prevent damage of the shield when it is subjected to heat treatment along with silicone in the above described post-curing process, the rigid skeleton of the shield can comprise of a material having a temperature resistance that is sufficiently high, for example poly-ether-ether-ketone (PEEK) or polyether-block-amides (PEBAX). Such materials for the shield enable the production of a soother in a single piece construction having a hard, rigid skeleton and a silicone baglet. However use of such hard materials is undesirable as these materials are many times more expensive than traditional soother materials.

Where co-moulding relies on strong bonding between the soother materials then a two-shot moulding process using silicone of different respective hardnesses for the soft teat and rigid shield can be adopted. This is the preferred approach for the soother shown in Figs.. 9 and 10. In such a construction, post-curing will have the positive effect of removing volatiles from both materials without any drawbacks from material instability at high temperature. In order to provide a bond strong enough to meet current soother tensile strength standards, the two respective silicone grades that should be used in such a construction are those which have very close grades of hardness (e.g. as measured by the Shore A hardness scale). Therefore, in order to provide sufficient rigidity to the shield the silicone grades may have to have relatively high Shore A hardness, for example in the range 70 to 100. However, as discussed above, this degree of hardness may provide some discomfort to the infant. A preferred construction from the point of view of comfort would be to use two relatively soft silicone grades, for example having Shore A hardness in the range 30 to 70, however such a construction may provide insufficient rigidity and thereby not meet applicable national and/or international safety standards. A potential way around this is to have an oversized shield to compensate for the material strength deficiencies, however this would make the soother heavy and difficult to use.

It will be appreciated from the above that, in order to provide both sufficient comfort to an infant using a soother and to provide a soother of sufficient rigidity in order to meet the national and/or international safety standards, it is preferable to construct a soother wherein the shield and baglet portions are both composed of silicone and have sufficiently different respective hardness grades. However, it is impossible to apply known techniques in order to mould together two silicone types having substantially different hardnesses in order to provide a bond that is sufficiently strong enough to meet the relevant soother tensile strength standards.

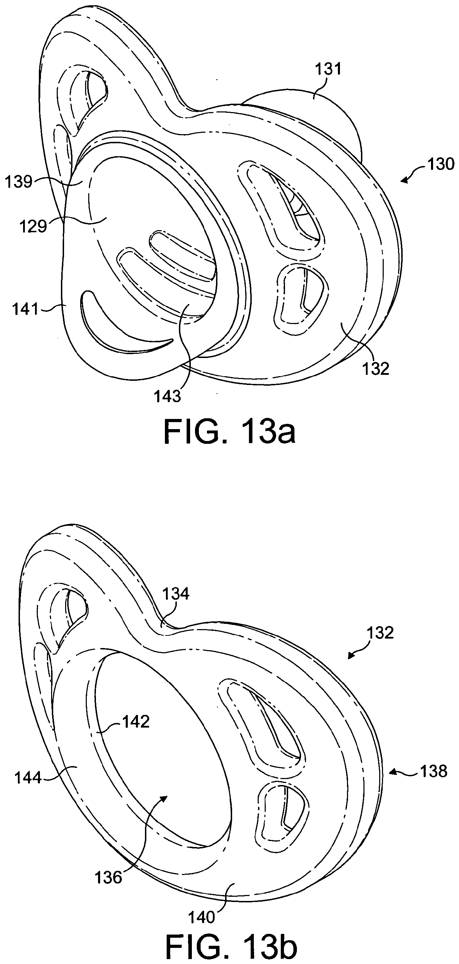

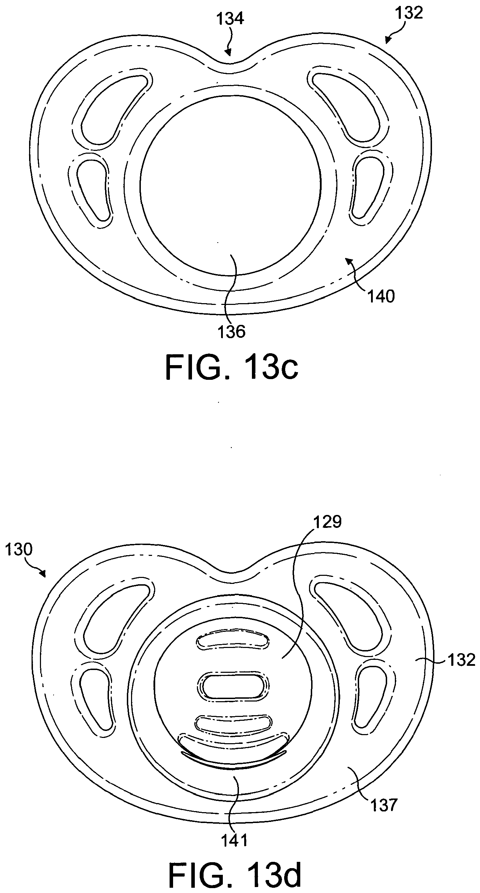

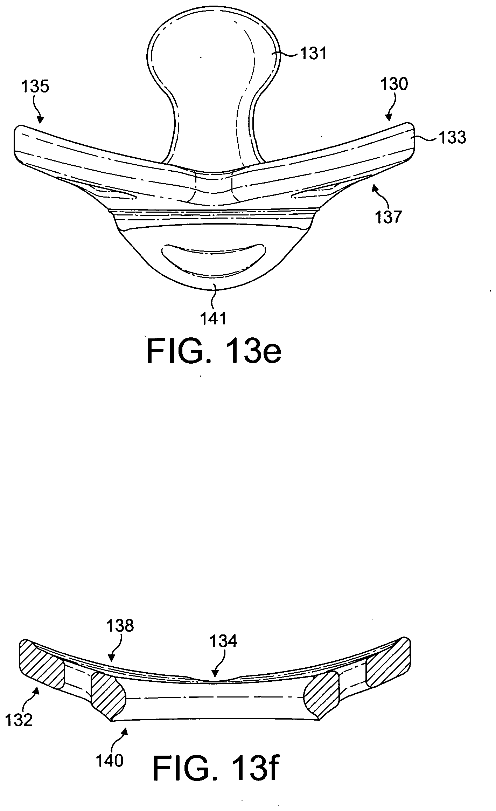

A baglet 129 and shield 132 of a soother 130 that overcomes the above-mentioned problems for construction using two different respective silicone hardness grades are shown in Figs. 13a to 13f. The shield 132 is of a similar size to the rigid shield portions in known soother constructions. It is comprised of relatively hard, rigid silicone having a Shore A hardness between 70 to 100, and preferably around 80, thereby ensuring that the finished soother 130 is rigid enough to meet safety criteria. The shield 132 has a rounded outer edge and, in a preferred embodiment, comprises a dip 134 in the centre of the top portion of its outer circumference in order to accommodate an infant's nose and allow more comfortable breathing in use. There is a central cavity 136 extending between the inner 138 and outer 140 faces of the shield. The central cavity 136 defines a substantially annular inner wall 142.

According to a preferred embodiment as shown in Fig. 13b, a circumferential ridge 144 is provided around the central cavity 136, either in addition to or instead of the inner wall 142, wherein said circumferential ridge 144 has a profile that extends radially inwards from the outer face 140 of the shield towards the inner face 138. The circumferential ridge 144 slopes at an angle to the central axis through the central cavity 136 of the shield 142, such that an increased surface area is provided without increasing the thickness between the inner a138 and outer 140 faces of the shield 142. The ridge 144 can be substantially planar or can have a substantially curved profile. In the preferred embodiment shown in Fig 13b, the inner wall 142 is formed as a lip at the inner end of the circumferential ridge 144, said inner wall 142 extending substantially parallel to the central axis through the central cavity 136. This lip provides an area which can form a more effective seal with the moulding machinery during construction of the soother 130, thereby increasing reliability of the moulding process and reducing the number of rejects produced.

Although the cavity 136 is shown in Figs. 13b and 13c as being substantially circular, it is possible for the cavity to be oval having two lines of symmetry therein, or to be egg-shaped, having one line of symmetry therein, or indeed to be asymmetric. Large air holes are preferably provided extending through the shield 132, to the left and right of the central cavity 136.

The baglet 129 as shown in Fig. 13a is comprised of relatively soft silicone, for example of Shore A hardness between 30 and 70, and preferably of Shore A hardness 50. The baglet 129 includes a nipple portion 131 extending inwardly of the inner face 138 of the soother shield 132. The baglet 129 further includes a ring 139 below the base of the nipple portion 131. The ring 139 defines a cavity in the baglet material that corresponds to the central cavity 136 in the shield 132. The nipple portion 131 extending inward of this cavity can be either hollow or solid.

The thickness of the baglet material in the ring 139 structure is thicker than the material in the nipple portion 131 of the baglet 129. Hence the ring 139 itself contributes to the overall rigidity of the soother 130. During construction, the ring 139 is moulded to the inner wall 142 of the central cavity 136 of the shield 132, in the vicinity of which the surface area of the shield 132 has been maximised. Therefore, although the natural surface bonding between the respective materials of the baglet 129 and shield 132 may be relatively weak, a large enough surface area is provided over which the two materials can attach and thereby form a sufficiently strong bond in order for the soother 130 to meet the necessary safety standards. As discussed above, the preferred embodiment of the shield 132 includes a circumferential ridge 144, thereby creating a larger surface area in the vicinity of the cavity 136 without increasing the thickness between the inner and outer faces of the shield 142, hence increasing the bonding between the baglet 129 and the shield 132.

In a further embodiment not shown, a flange portion can be provided at the base of the nipple portion 131 of the baglet 129, wherein said flange is over moulded over the inner face of the shield 132 such that its edges wrap around the corresponding edges of the shield 132. A continuous layer of baglet material is thus provided over at least the inner face of the shield, making it softer in the areas which come in contact with an infant's face during use.

The soft material of the baglet 129 according to these embodiments optimises the baglet function in providing an ideal grade for flex, stretch, bite resistance and other physical properties required for a soother. By using the two distinct grades of silicone in the baglet 129 and shield 132 respectively, the need for either the baglet 129 to be much too hard and therefore uncomfortable to an infant, or for the shield 132 to be too thick or soft, and consequently the soother falling below safety standards is eliminated. Furthermore, the harder-grade silicone that is used for the shield is rigid enough to enable the resulting soother to meet safety standards but is not so rigid that it would cause discomfort for an infant in use. Therefore it is not necessary to overmould the soft baglet material to cover the inner face of the shield 132.

The above-described advantages are enhanced because the soft material has a supplemental ring structure, via which the baglet material contributes to some of the overall mechanical rigidity of the structure. Therefore the rigid silicone material of the shield does not have to be overly hard in order to meet the relevant safety standards. This effect can be seen particularly in embodiments wherein the central cavity 136 of the shield 132 and therefore the corresponding ring 139 of the baglet 129 are of a relatively large diameter i.e. considerably larger than the diameter of the neck of a baglet in a typical known soother comprising two or more components.

The soft baglet materials and supplementary ring structure are moulded to extend outwards of the outer face 140 of the shield and thereby to create a handle 141, the presence of which is another requirement of the international standards for soothers. With the embodiment of Figs. 13a to 13f, the soother is hollow in the nipple portion 131 and has a handle extending from the ring structure of the baglet 129, below the aperture leading to the inner cavity within the nipple portion 131. In such an arrangement the baglet and the handle are moulded easily and simultaneously, because withdrawal of the metal mould insert that determines the boundaries of the inner wall of the baglet can easily be withdrawn after moulding, without interference from the handle. This means that the soother 130 is easier to manufacture as compared to many known soothers.

As shown on Fig. 13a, it is possible for thin regions 143 to be provided in the material of the baglet 129, in the area extending from the ring 139 outwards towards the nipple portion 131 in order to assist with flexibility of the baglet to enable the teat to move in and out with suction pressure applied by an infant during use.

The baglet 129 and shield 132 of Figs. 13a and 13b respectively fit together as described above to provide a completely smooth joint line between the two hardness grades of silicone used. As a result, the soother has no areas in which dirt or bacteria can be trapped.

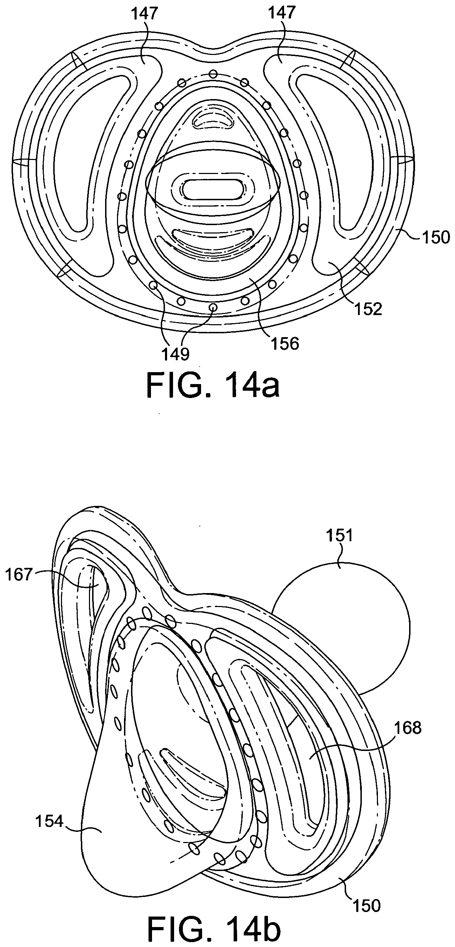

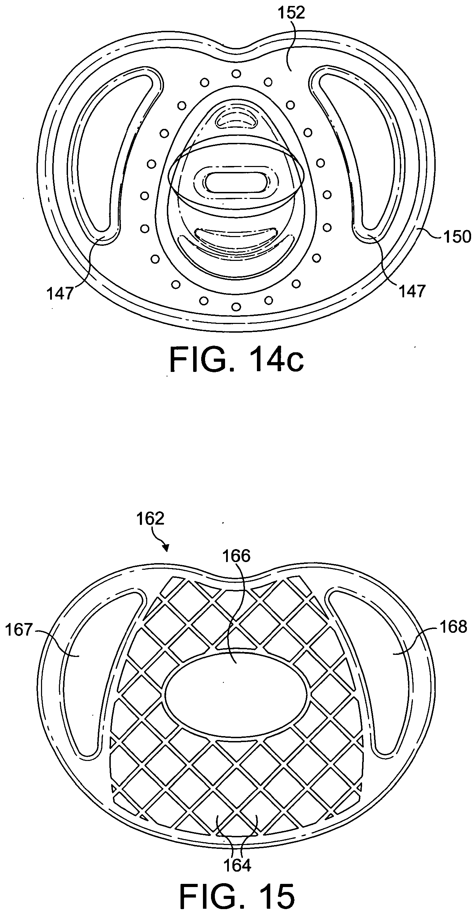

A variation of the embodiment shown in Figs. 13a to 13f is shown in Figs. 14a to 14c. As shown therein, in addition to bonding to the shield 152 as described with respect to the embodiment in Figs. 13a to 13f, the baglet 150 is further secured to the shield by overmoulding. The soft baglet material therefore covers at least a portion of the inner face of the shield 152, increasing the surface area of contact between the respective baglet and shield materials, and laps over its outer edge. As a result, the soother surface is softer in the areas that contact an infant's face in use. Holding areas 147 are provided around the large air holes in the shield, to the left and right of the central cavity, wherein said holding areas allow the second-shot moulding tool to grip the mould and include rims or other raised portions to prevent the soft baglet material from also extending over the edges that define the large air holes.

A series of small holes 149 through the rigid shield 152 are provided around the periphery of the central cavity 156. These holes 149 enable the soft baglet material to penetrate therethrough, to the outer face of the shield. Therefore the soft baglet material at least partially interlocks with the shield, increasing the mechanical engagement between the two components, when adhesion between the surfaces of the two materials would otherwise be too weak for the resulting soother to meet the relevant safety standards.

As shown in Fig. 14b, the handle 154 extending from the ring of the baglet may include a series of bumps or other textured portions in order to provide improved grip. In addition, the upper surface area of the nipple portion 151 can include a series of flex and stretch ripples in order to assist natural movement of the soother teat during use. These flex and stretch ripples may also be provided on the flange portion of the baglet 150 around the bottom of the nipple portion 151.

A further alternative shield embodiment is shown in Fig. 15. According to this embodiment, at least a portion of the rigid skeleton of the shield 162 is comprised of a mesh material. The entire skeleton of the silicone shield 162 can be comprised of the mesh material or, alternatively, the shield 162 can include localised regions of the mesh material. As a result of this, when the soft silicone is moulded in the second shot of the two-shot soother construction process, is has an increased surface area through which to become mechanically engaged with the rigid material of the shield.

The size of the mesh openings 164 can be varied. An optimal design includes mesh openings 164 that are large enough to enable the soft silicone material of the baglet to be injection moulded through all the apertures therein but still small enough so that the soft material on either side of the mesh areas 164 forms a smooth continuous surface to provide maximum comfort for the infant.

The only areas where the softer baglet material will not form a continuous layer around the shield 162 are around the left 167 and right 168 air holes and the central cavity 166. Optionally, the softer baglet material can mould just up to the rim of the left 167 and right 168 air holes, without over moulding the perimeter thereof.

As with the other embodiments described above, when constructing a soother using the shield 162 or Fig 15, the nipple portion of the baglet that extends inwards from the rigid shield can either be hollow or solid. The baglet material is moulded to form a handle shape extending from the central cavity, in the opposite direction to the extension of the nipple portion.

In a variation to the embodiment shown in Fig. 15, the solid arc extending on the left and right hand sides of the rigid skeleton, around the left 167 and the right 168 air holes, can be removed, such that the shield 162 comprises only the central mesh portion. In such an embodiment, the outer arms that define the air holes can be completely moulded in the softer baglet material of the second shot moulding.

In a further variation to the embodiment shown in Fig 15 the mesh material can be formed of a third material, distinct to the shield and baglet silicone materials. The rigid mesh can be encapsulated in the shield formed of the relatively hard grade silicone, in order to provide sufficient rigidity to the shield structure whilst avoiding the need to use an uncomfortably hard grade of silicone for the inner face of the shield, which is in contact with an infant's face during use. Such an arrangement thus means that the outer material of the shield component can be of a softer grade than would otherwise be possible without the reinforced mesh, because the mesh provides the required rigidity in order for the resulting soother to pass the relevant safety standards. This means that if soft baglet material is over moulded over at least part of the shield, the respective hardnesses of the silicone grades used for the shield and the baglet can be close enough to enable the two materials to co-mould to one another with an acceptable amount of adhesion. Such an arrangement can also reduce the need for overmoulding of the soft baglet material over the shield material for comfort reasons.

In one preferred approach as discussed above, the construction uses silicone materials for at least the baglet and preferably also the shield since it provides appropriate material performance properties for soothers; being flexible and strong whilst being comfortable when in contact with an infant's face. Furthermore silicone does not degrade in use retaining most of its mechanical properties. However, it is envisaged that a wide range of soft and hard material can be combined in the manner described above, particularly using the shield embodiment of Fig. 15, since the structural integrity of the final soother allows improved mechanical interlocking of the soft and hard materials. This mechanical interlocking via the mesh configuration of the shield will allow previously unreliable combinations of hard and soft materials to be successfully combined since there would be minimal necessity for the two surfaces of the two materials to have a strong adhesion to one another.

As an alternative to silicone, materials can be used for the baglet and shield if they have low enough volatile content such that there is no need for post-curing to meet the present safety standard. Alternatively, a material can be used for the baglet which does not require a post-cure process involving heat but instead can be post-cured using cold-curing techniques. These alternative baglet options provide the possibility of producing a soother having a cheap rigid skeleton material such as PC or PP, whilst still allowing incorporation of a sufficiently soft baglet that is comfortable for the infant during use.

The particular co-moulding process, be it injection moulding or compression moulding, can be adopted as appropriate dependent on the type of material being used for a particular soother construction. In any case, it will be seen that because of the simplicity of the soother's construction for the above-described embodiments and, correspondingly, the low number of parts are required to secure the components together, there are no enclosed spaces which could otherwise present dirt/bacteria traps that are difficult to clean are therefore potentially harmful to an infant. Either the teat is solid and mates with all adjacent surfaces of the shield or the teat is hollow but accessible through the shield. All surfaces of the soother are therefore visible and accessible for cleaning.

As a result of the co-moulding approach adopted according to the embodiments, numerous other advantages are also provided. The soother has a safe construction because of the semi-rigid nature of the shield reducing the risk of collapse and hence preventing choking hazard to the infant. The soother is completely free from assembly stresses hence avoiding the risk of premature failure that such stresses can cause. Furthermore, in the case of a hollow teat construction there is no risk of trapped water/chemical sterilising solutions as all surfaces are free draining.

In the soother embodiments having a ring structure in the soft baglet material and a corresponding inner wall and;/or circumferential ridge in the rigid shield, the surface area provided for adhesion between the two materials is maximised. Therefore two materials that conventionally could not be used together in a co-moulded soother due to poor natural adhesion therebetween, for example two silicone materials having different hardness grades, can successfully be used together. Therefore a soother can be produced wherein all the materials therein are damage-protected, and indeed benefit from, post-curing processes using heat treatment to reduce the volatiles content of the baglet material.

The above-described effect is particularly pronounced in embodiments wherein the inner wall comprises, in full or in part, a ridge that extends radially inwards between the outer and inner faces of the shield. By extending radially inward in this manner, the ridge increases the surface area provided for adhesion of the shield to the baglet material, without the need to increase the cross-sectional thickness of the shield between the two faces. Hence the soother does not have to be overly-rigid, which would otherwise create discomfort for an infant using the soother. In addition, the use of a ridge in combination with the inner wall, wherein the ridge extends at an acute angle outwardly of the inner wall, creates a lip or other grip means for moulding machinery to use when forming the soother, hence improving ease of manufacture.

Similarly, in soother embodiments wherein some of or the entire rigid shield comprises a mesh material, a large area is provided over which the soft baglet material can bond to the rigid shield material. Again this means that two materials that conventionally could not be co-moulded together to form a sound soother that meets the requisite safety standards can now be used together successfully for this purpose.

In embodiments wherein a rigid mesh is encapsulated by the shield material, the shield material is relatively soft and thus comfortable to an infant, regardless of whether any baglet material is overmoulded thereover, and the resulting soother is also sufficiently rigid and resistant to crumpling in order to meet the necessary safety standards.

The co-moulding approach described allows automated manufacturing methods that largely eliminate defective soothers being produced during assembly, hence making manufacture more efficient and cost-effective. Where decoration is required the shield can be moulded and decorated before over-moulding the baglet/teat material thereover.

It will be appreciated that features of the embodiments described above can be interchanged and juxtaposed as appropriate. For example any shape and type of teat whether hollow or solid can be incorporated with any of the types of shield described above, and any form of grip in the form for example of a ring or knob can be used accordingly.

## Claims

1. A method of making a soother (130) using a moulding process, said moulding process comprising co-moulding a teat portion (129) formed of a first relatively flexible material and a mount portion (132) formed of a second relatively rigid material, wherein the mount portion (132) comprises a substantially central cavity (136) defined by an inner wall (142) extending between inner (138) and outer (140) faces of the mount portion (132);
wherein the teat portion (129) includes a fortified ring structure (139) below the base of the teat portion (129) corresponding to said inner wall (142), wherein said co-moulding step forms a bond between a surface of the fortified ring structure (139) and the inner wall (142), and wherein the teat portion (129) is secured to the mount portion (132) solely by said moulding process,
**characterised in that** the soother comprises a handle (141), wherein the handle (141) is formed as an extension of the teat portion (129).

2. A method as claimed in claim 1 in which the mount portion (132) comprises a shield.

3. A method as claimed in claim 1 or 2 in which the co-moulding step comprises one of injection moulding or compression moulding.

4. A method as claimed in any preceding claim wherein said moulding process further comprises a step in which the teat portion (129) is over-moulded on the mount portion (132), and preferably in which the teat portion (129) is partially over- moulded on the mount portion (132).

5. A method as claimed in claim 4 wherein the teat portion (129) forms an interlock with at least part of the mount portion (132).

6. A soother (130) comprising a relatively flexible teat portion (129) and a relatively rigid mount portion (132) wherein the teat portion (129) is co-moulded to at least part of the mount portion (132) to form an attachment therebetween, wherein the mount portion (132) comprises a substantially central cavity (136) defined by an inner wall (142), extending between inner (138) and outer (140) faces of the mount portion (132),:
wherein the teat portion (129) includes a fortified ring structure (139) below the base of the teat portion (129) that corresponds to said inner wall (142) such that a bond is formed between a surface of the fortified ring structure (139) and the inner wall (142);
wherein the teat portion (129) and the mount portion (132) are secured to one another solely by being moulded together, and
**characterised in that** the soother further comprises a handle (141), wherein the handle (141) is formed as an extension of the teat portion (129).

7. A soother (130) as claimed in claim 6 in which the teat portion (129) is also over-moulded on the mount portion (132).

8. A soother (130) as claimed in claim 6 or claim 7 in which the mount portion (132) comprises a shield.

9. A soother (130) as claimed in any of claims 6 to 8 wherein the relatively flexible teat portion (129) and the relatively rigid mount portion (132) are each formed of silicone material, and preferably wherein the relatively flexible teat portion (129) comprises silicone material of between 30 and 70 Shore Hardness A, and preferably 50 Shore Hardness A, and wherein the relatively rigid material comprises silicone material of between 70 and 100 Shore hardness A, and preferably 80 Shore Hardness A.

10. A soother (130) as claimed in claim 6 wherein the inner wall (142) includes a sloping ridge (144) extending between the inner (138) and outer (140) surfaces of the mount portion (132), and preferably wherein the mount portion (132) further includes a plurality of holes (149) located substantially around the perimeter of the central cavity.

11. A soother (130) as claimed in any of claims 6 to 10 wherein at least part of the mount portion (130) comprises a mesh material, having a plurality of apertures (164) therein, and preferably wherein the mesh material is encapsulated by a continuous material to form the mount portion (132).

12. A soother (130) as claimed in any of claims 6 to 11 wherein the teat portion (129) includes at least one relatively thin region (143), to provide increased flexibility of the teat portion (129) in use.

13. A soother (130) as claimed in any one of claims 6 to 12, in which the teat portion (129) is substantially hollow, and preferably in which the interior of the teat is accessible via an aperture in the mount portion (132).

14. A soother (130) as claimed in any of claims 6 to 8 in which the teat portion (129) is substantially solid.

15. A soother (130) as claimed in any of claims 6 to 14 wherein the substantially central cavity (136) in the mount portion (132) and the fortified ring structure (139) in the teat portion (129) are any of: circular, oval, egg shaped or asymmetric in cross section.

## Patentansprüche

1. Verfahren zum Herstellen eines Schnullers (130) unter Verwendung eines Formungsprozesses, wobei der Formungsprozess das Anformen eines Saugerabschnitts (129), der aus einem ersten relativ flexiblen Material gebildet ist, und eines Befestigungsabschnitts (132), der aus einem zweiten relativ starren Material gebildet ist, umfasst, wobei der Montageabschnitt (132) einen im Wesentlichen zentralen Hohlraum (136) umfasst, der durch eine Innenwand (142) definiert ist, die sich zwischen einer inneren (138) und einer äußeren (140) Fläche des Befestigungsabschnitts (132) erstreckt;
wobei der Saugerabschnitt (129) eine verstärkte Ringstruktur (139) unterhalb der Basis des Saugerabschnitts (129) einschließt, die der inneren Wand (142) entspricht, wobei der Anformungsschritt eine Verbindung zwischen einer Oberfläche der verstärkten Ringstruktur (139) und der inneren Wand (142) bildet, und wobei der Saugerabschnitt (129) ausschließlich durch den Formungsprozess an dem Befestigungsabschnitt (132) gesichert ist,
**dadurch gekennzeichnet, dass** der Schnuller einen Griff (141) umfasst, wobei der Griff (141) als eine Verlängerung des Saugerabschnitts (129) ausgebildet ist.

2. Verfahren nach Anspruch 1, wobei der Befestigungsabschnitt (132) einen Schild umfasst.

3. Verfahren nach Anspruch 1 oder 2, wobei der Anformungsschritt eines von Spritzgießen oder Formpressen umfasst.

4. Verfahren nach einem der vorstehenden Ansprüche, wobei der Formungsprozess ferner einen Schritt umfasst, in dem der Saugerabschnitt (129) auf den Befestigungsabschnitt (132) überformt wird, und vorzugsweise, in dem der Saugerabschnitt (129) teilweise an dem Befestigungsabschnitt (132) überformt wird.

5. Verfahren nach Anspruch 4, wobei der Saugerabschnitt (129) mit mindestens einem Teil des Befestigungsabschnitts (132) eine formschlüssige Verbindung bildet.

6. Schnuller (130), umfassend einen relativ flexiblen Saugerabschnitt (129) und einen relativ starren Befestigungsabschnitt (132), wobei der Saugerabschnitt (129) an mindestens einem Teil des Befestigungsabschnitts (132) angeformt ist, um eine Befestigung dazwischen zu bilden, wobei der Befestigungsabschnitt (132) einen im Wesentlichen zentralen Hohlraum (136) umfasst, der durch eine Innenwand (142) definiert ist, die sich zwischen einer inneren (138) und einer äußeren (140) Fläche des Befestigungsabschnitts (132) erstreckt;
wobei der Saugerabschnitt (129) eine verstärkte Ringstruktur (139) unterhalb der Basis des Saugerabschnitts (129) einschließt, die der inneren Wand (142) entspricht, sodass eine Verbindung zwischen einer Oberfläche der verstärkten Ringstruktur (139) und der Innenwand (142) gebildet wird;
wobei der Saugerabschnitt (129) und der Befestigungsabschnitt (132) nur durch Zusammenformen aneinander gesichert sind, und
**dadurch gekennzeichnet, dass** der Schnuller ferner einen Griff (141) umfasst, wobei der Griff (141) als eine Verlängerung des Saugerabschnitts (129) ausgebildet ist.

7. Schnuller (130) nach Anspruch 6, bei dem der Saugerabschnitt (129) auch an den Befestigungsabschnitt (132) angeformt ist.

8. Schnuller (130) nach Anspruch 6 oder 7, wobei der Befestigungsabschnitt (132) einen Schild umfasst.

9. Schnuller (130) nach einem der Ansprüche 6 bis 8, wobei der relativ flexible Saugerabschnitt (129) und der relativ starre Befestigungsabschnitt (132) jeweils aus Silikonmaterial gebildet sind, und wobei vorzugsweise der relativ flexible Saugerabschnitt (129) Silikonmaterial mit einer Shore-Härte A von 30 bis 70, vorzugsweise 50 Shore-Härte A, umfasst, und wobei das relativ starre Material Silikonmaterial mit einer Shore-Härte A von 70 bis 100, vorzugsweise 80 Shore-Härte A, umfasst.

10. Schnuller (130) nach Anspruch 6, wobei die Innenwand (142) einen geneigten Grat (144) einschließt, der sich zwischen der inneren (138) und äußeren (140) Oberflächen des Befestigungsabschnitts (132) erstreckt, und wobei vorzugsweise der Befestigungsabschnitt (132) ferner eine Vielzahl von Löchern (149) einschließt, die sich im Wesentlichen um den Umfang des zentralen Hohlraums herum befinden.

11. Schnuller (130) nach einem der Ansprüche 6 bis 10, wobei mindestens ein Teil des Befestigungsabschnitts (130) ein Maschenmaterial umfasst, das eine Vielzahl von Öffnungen (164) darin aufweist, und wobei vorzugsweise das Maschenmaterial durch ein kontinuierliches Material eingekapselt ist, um den Befestigungsabschnitt (132) zu bilden.

12. Schnuller (130) nach einem der Ansprüche 6 bis 11, wobei der Saugerabschnitt (129) mindestens einen relativ dünnen Bereich (143) einschließt, um eine erhöhte Flexibilität des Saugerabschnitts (129) in Verwendung bereitzustellen.

13. Schnuller (130) nach einem der Ansprüche 6 bis 12, bei dem der Saugerabschnitt (129) im Wesentlichen hohl ist, und vorzugsweise bei dem das Innere des Saugers über eine Öffnung in dem Befestigungsabschnitt (132) zugänglich ist.

14. Schnuller (130) nach einem der Ansprüche 6 bis 8, bei dem der Saugerabschnitt (129) im Wesentlichen massiv ist.

15. Schnuller (130) nach einem der Ansprüche 6 bis 14, wobei der im Wesentlichen zentrale Hohlraum (136) in dem Befestigungsabschnitt (132) und die verstärkte Ringstruktur (139) in dem Saugerabschnitt (129) einen beliebigen der folgenden Querschnitte aufweisen: kreisförmig, oval, eiförmig oder asymmetrisch.

## Revendications

1. Procédé de fabrication d'une sucette (130) à l'aide d'un procédé de moulage, ledit procédé de moulage comprenant le co-moulage d'une partie de tétine (129) formée d'un premier matériau relativement souple et d'une partie de montage (132) formée d'un second matériau relativement rigide, dans lequel la partie de montage (132) comprend une cavité sensiblement centrale (136) définie par une paroi interne (142) s'étendant entre des faces interne (138) et externe (140) de la partie de montage (132) ;
dans lequel la partie de tétine (129) comporte une structure annulaire fortifiée (139) en dessous de la base de la partie de tétine (129) correspondant à ladite paroi interne (142), dans lequel ladite étape de co-moulage forme une liaison entre une surface de la structure annulaire fortifiée (139) et la paroi interne (142), et dans lequel la partie de tétine (129) est fixée à la partie de montage (132) uniquement par ledit processus de moulage,
**caractérisé en ce que** la sucette comprend une poignée (141), dans lequel la poignée (141) est formée comme une extension de la partie de tétine (129).

2. Procédé selon la revendication 1, dans lequel la partie de montage (132) comprend une protection.

3. Procédé selon la revendication 1 ou 2, dans lequel l'étape de co-moulage comprend l'un parmi le moulage par injection ou le moulage par compression.

4. Procédé selon l'une quelconque revendication précédente, dans lequel ledit processus de moulage comprend en outre une étape dans laquelle la partie de tétine (129) est surmoulée sur la partie de montage (132), et de préférence dans laquelle la partie de tétine (129) est partiellement surmoulée sur la partie de montage (132).

5. Procédé selon la revendication 4, dans lequel la partie de tétine (129) forme un verrouillage avec au moins une section de la partie de montage (132).

6. Sucette (130) comprenant une partie de tétine relativement souple (129) et une partie de montage relativement rigide (132) dans laquelle la partie de tétine (129) est co-moulée à au moins une section de la partie de montage (132) pour former un attachement entre elles, dans laquelle la partie de montage (132) comprend une cavité sensiblement centrale (136) définie par une paroi interne (142), s'étendant entre des faces interne (138) et externe (140) de la partie de montage (132),
dans laquelle la partie de tétine (129) comporte une structure annulaire fortifiée (139) en dessous de la base de la partie de tétine (129) qui correspond à ladite paroi interne (142) de telle sorte qu'une liaison est formée entre une surface de la structure annulaire fortifiée (139) et la paroi interne (142) ;
dans laquelle la partie de tétine (129) et la partie de montage (132) sont fixées l'une à l'autre uniquement en étant moulées ensemble, et
**caractérisée en ce que** la sucette comprend en outre une poignée (141), dans laquelle la poignée (141) est formée comme une extension de la partie de tétine (129).

7. Sucette (130) selon la revendication 6, dans laquelle la partie de tétine (129) est également surmoulée sur la partie de montage (132).

8. Sucette (130) selon la revendication 6 ou la revendication 7, dans laquelle la partie de montage (132) comprend une protection.

9. Sucette (130) selon l'une quelconque des revendications 6 à 8, dans laquelle la partie de tétine relativement souple (129) et la partie de montage relativement rigide (132) sont chacune formées de matériau de silicone, et de préférence dans lequel la partie de tétine relativement souple (129) comprend un matériau de silicone compris entre 30 et 70 dureté Shore A, et de préférence 50 dureté Shore A, et dans laquelle le matériau relativement rigide comprend un matériau de silicone compris entre 70 et 100 dureté Shore A, et de préférence 80 dureté Shore A.

10. Sucette (130) selon la revendication 6, dans laquelle la paroi interne (142) comporte une crête inclinée (144) s'étendant entre les surfaces interne (138) et externe (140) de la partie de montage (132), et de préférence dans laquelle la partie de montage (132) comporte en outre une pluralité de trous (149) situés sensiblement autour du périmètre de la cavité centrale.

11. Sucette (130) selon l'une quelconque des revendications 6 à 10, dans laquelle au moins une section de la partie de montage (130) comprend un matériau maillé, ayant une pluralité d'ouvertures (164) dans celle-ci, et de préférence dans laquelle le matériau maillé est encapsulé par un matériau continu pour former la partie de montage (132).

12. Sucette (130) selon l'une quelconque des revendications 6 à 11, dans laquelle la partie de tétine (129) comporte au moins une région relativement mince (143), pour fournir une flexibilité accrue de la partie de tétine (129) lors de l'utilisation.

13. Sucette (130) selon l'une quelconque des revendications 6 à 12, dans laquelle la partie de tétine (129) est sensiblement creuse, et de préférence dans laquelle l'intérieur de la tétine est accessible par l'intermédiaire d'une ouverture dans la partie de montage (132).

14. Sucette (130) selon l'une quelconque des revendications 6 à 8, dans laquelle la partie de tétine (129) est sensiblement solide.

15. Sucette (130) selon l'une quelconque des revendications 6 à 14, dans laquelle la cavité sensiblement centrale (136) dans la partie de montage (132) et la structure annulaire fortifiée (139) dans la partie de tétine (129) sont l'une quelconque parmi : circulaire, ovale, de forme ovoïde ou asymétrique en coupe transversale.
